# FASCICULE DE BREVET EUROPEEN

(11) **EP 0 527 093 B1**
(45) Date de publication et mention de la délivrance du brevet: **19.04.1995**
(21) Numéro de dépôt: 92420237.7
(22) Date de dépôt: 10.07.1992
(51) Int. Cl.: E01F 15/00

(54) **Dispositif pour réaliser un déplacement latéral d'une série d'éléments de balisage de voie de circulation routière liés les uns aux autres**
Anlage zur Querversetzung von untereinanderverbundenen Strassenleiteinrichtungselementen
Equipment for laterally replacing a series of interconnected safety kerbs

(30) Priorité: 11.07.1991 FR 9109551
(43) Date de publication de la demande: 10.02.1993
(73) Titulaire: SARL GESTRA Société à Responsabilité Limitée de droit français, F-71530 Crissey (FR)
(72) Inventeur: Bas, Jean-Paul, F-69007 Lyon (FR)
(74) Mandataire: Maureau, Philippe

(56) Documents cités:
- EP-A- 0 172 062
- US-A- 4 017 200
- US-A- 4 881 845
- TRAVAUX no. 602, 1985, PARIS pages 12 - 18;J.F. LASSERRE: "le séparateur transposable"

## Description

La présente invention a pour objet un dispositif pour réaliser un déplacement latéral d'une série d'éléments de balisage de voie de circulation liés les uns aux autres.

Il est de plus en plus fréquent, lors de la réalisation de travaux sur une voie de circulation routière, de séparer la zone de travaux de la zone de circulation avec des éléments de balisage en béton, ou en matière synthétique, qui réalisent une barrière continue. Un tel dispositif de balisage vise à améliorer la sécurité, d'une part, du personnel travaillant sur le chantier et, d'autre part, des usagers de la route. Il est également possible, à l'aide de tels éléments de balisage, de matérialiser deux voies de circulation au niveau d'une zone de chantier ou au niveau d'une déviation.

La variation de l'intensité de la circulation peut nécessiter, lors de la réalisation des travaux, ou en période de suspension de ceux-ci, par exemple en fin de semaine, la translation des éléments de balisage afin de modifier le nombre de voies ouvertes au trafic, ou simplement de moduler la largeur des voies. Actuellement, ces déplacements se font essentiellement de façon manuelle, ou à l'aide d'engins motorisés équipés de bras susceptibles de faire riper les éléments transversalement pour les faire passer d'une première position à une position suivante. Il faut tenir compte du fait que cette opération est délicate compte tenu de la liaison réalisée entre les différents éléments, par exemple par clavetage. En outre, cette opération de ripage nécessite une intervention sur la voie même de circulation, ce qui constitue un danger, d'une part, pour les opérateurs, et, d'autre part, pour les usagers de la route.

Pour remédier à ces inconvénients, il a été imaginé de réaliser des éléments comportant une partie supérieure ou tête de forme élargie, en vue d'assurer la préhension sous cette tête. Il est alors possible, à l'aide d'une remorque spécialement adaptée, de prendre appui sous la tête de chaque élément de balisage, pour le soulever, et réaliser sa translation latérale, pour modifier sa position (EP-A-0 172 062).

Toutefois, ce dispositif de déplacement des éléments ne peut être utilisé que pour ces éléments spécifiques à tête élargie.

Le but de l'invention est de fournir un dispositif pour réaliser un déplacement latéral d'une série d'éléments de balisage liés les uns aux autres, quelle que soit la nature des matériaux constitutifs des éléments, quelle que soit la forme de ceux-ci, et qui permette ce déplacement sans avoir à retirer les équipements de sécurité ou de balisage pouvant être fixés sur certains des éléments.

A cet effet, le dispositif qu'elle concerne, du type comportant un véhicule motorisé ou tracté comportant un chemin de guidage d'orientation générale longitudinale dont les extrémités débouchant dans les faces avant et arrière du véhicule sont décalées transversalement l'une par rapport à l'autre, est caractérisé en ce qu'il comporte au moins un chemin de guidage longitudinal rectiligne pour les éléments de balisage, équipé de moyens de supports sur lesquels les éléments reposent par leur base, plane ou évidée, sans démontage des équipements de sécurité ou de balisage fixés sur la face supérieure des éléments, et de moyens de guidage latéral des éléments, ce chemin de guidage d'orientation générale longitudinale par rapport au véhicule étant associé à des moyens de réglage de l'angle qu'il forme avec l'alignement des éléments de balisage à déplacer, et étant équipé à ses deux extrémités, de deux becs dépassant du véhicule, inclinés chacun de haut en bas et du chemin de guidage vers l'extrémité libre du bec, servant à l'amenée successive des éléments sur le chemin de guidage puis au dépôt de ceux-ci sur la chaussée, chaque bec étant monté pivotant sur le véhicule autour d'un axe vertical et blocable dans la position souhaitée, qui correspond sensiblement avec l'axe de l'alignement des éléments de balisage à déplacer ou venant d'être déplacés.

Il est ainsi possible de réaliser un déplacement latéral d'éléments de balisage liés les uns aux autres, en déplaçant simplement le véhicule le long de la ligne formée par une serie d'éléments de balisage liés les uns aux autres. Il suffit d'engager les premiers éléments de balisage dans le chemin de guidage du véhicule, de donner au chemin de guidage l'angle souhaité par rapport à l'axe de déplacement du véhicule pour obtenir une translation latérale des éléments de balisage de la valeur voulue. Le véhicule respecte le gabarit routier, tout en pouvant, s'il forme un angle avec la direction de déplacement, translater les éléments de balisage sur une distance supérieure à la largeur du véhicule, par exemple de l'ordre de quatre mètres. Cette conception permet au véhicule, lorsqu'il réalise le déplacement des éléments, de rester à l'intérieur de la zone définie par la position existante des éléments de balisage et la position future de ceux-ci, ce qui augmente considérablement la sécurité du personnel et des usagers de la route, par rapport aux solutions connues actuellement. Il est également intéressant de noter que, les éléments de balisage étant supportés par le véhicule, et le châssis de celui-ci étant situé en-dessous des chemins de guidage, toute la partie libre au-dessus des chemins de guidage est donc libre, ce qui permet de laisser installés sur les éléments de balisage, lors du déplacement de ceux-ci, les organes de signalisation d'éclairage, ou tout autre équipement qui y serait éventuellement fixé.

Avantageusement, et afin de permettre le réglage angulaire du chemin de guidage, le véhicule est équipé de roues orientables et blocables dans la position souhaitée.

Selon une première forme d'exécution, le véhicule comporte un chemin de guidage central et longitudinal, orientable depuis une position dans laquelle les extrémités du chemin de guidage ne sont pas décalées transversale ment jusqu'à des positions où elles sont décalées transversalement d'un côté ou de l'autre de l'axe longitudinal du véhicule.

Selon une autre forme d'exécution de ce dispositif, le véhicule comporte deux chemins de guidage se croisant en leur milieu, à la façon d'un X, et orientés selon les deux diagonales du rectangle que forme, en vue de dessus, la remorque.

Avantageusement, chaque chemin de guidage comprend une série de rouleaux horizontaux destinés à supporter les éléments de balisage et deux séries de rouleaux verticaux disposés de part et d'autre des rouleaux horizontaux et destinés à guider les éléments.

Afin de permettre l'adaptation du dispositif à des éléments de différentes largeurs, les rouleaux de l'une au moins des séries de rouleaux verticaux sont réglables dans une direction transversale à la direction du chemin de guidage, afin de pouvoir modifier l'écartement entre les deux séries de rouleaux verticaux, et permettre une adaptation à des éléments de différentes largeurs.

Selon une autre caractéristique de l'invention, dans le cas d'un véhicule équipé de deux chemins de guidage croises en X, la zone de croisement des deux chemins de guidage est équipée d'un élément pivotant autour d'un axe vertical, formant un aiguillage, et portant des rouleaux horizontaux et des rouleaux verticaux, susceptibles d'être alignés avec les rouleaux de l'un ou l'autre des deux chemins de guidage.

Il est également possible, non pas de prévoir un élément pivotant, mais de positionner manuellement les rouleaux verticaux et les rouleaux horizontaux, dans la zone de croisement en fonction du chemin de guidage utilisé.

Avantageusement, dans la mesure où les éléments de balisage comportent un évidement central et longitudinal en U débouchant dans leur fond, chaque bec comprend un bâti de section inférieure à celle de cet évidement, portant des rouleaux horizontaux destinés à prendre appui dans le fond de l'évidement, pour supporter l'élément, et des rouleaux latéraux d'orientation sensiblement verticale destines a assurer le guidage de chaque élément par appui contre les flancs de l'évidement.

Dans la mesure où les éléments ne comportent pas cet évidement central et longitudinal, il convient de lever les premiers éléments de quelques centimètres pour les amener en appui sur le bec d'entrée, les éléments suivants étant automatiquement déplacés vers le haut par traction des éléments qui les précèdent sur le chemin de guidage.

De toute façon, l'invention sera bien comprise à l'aide de la description qui suit, en référence aux dessins schématiques annexés représentant, à titre d'exemples non limitatifs, deux formes d'exécution de ce dispositif :
Figure 1 est une vue de dessus d'un véhicule se présentant sous la forme d'une remorque comportant deux chemins de guidage croises en X ;
Figure 2 en est une vue de côté ;

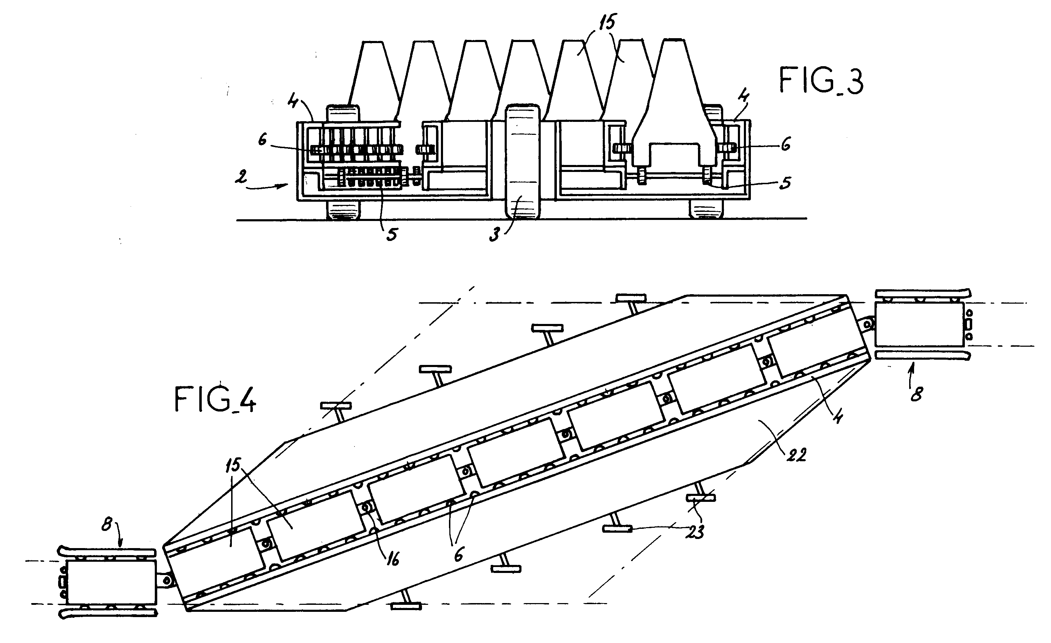

Figure 3 en est une vue en bout selon la flèche F de figure 1 ;
Figure 4 est une vue d'une variante de ce dispositif ne comportant qu'un seul chemin de guidage ;
Figure 5 est une vue en perspective d'un bec de chargement ou de déchargement des blocs, destinés à réaliser le guidage intérieur de ceux-ci.

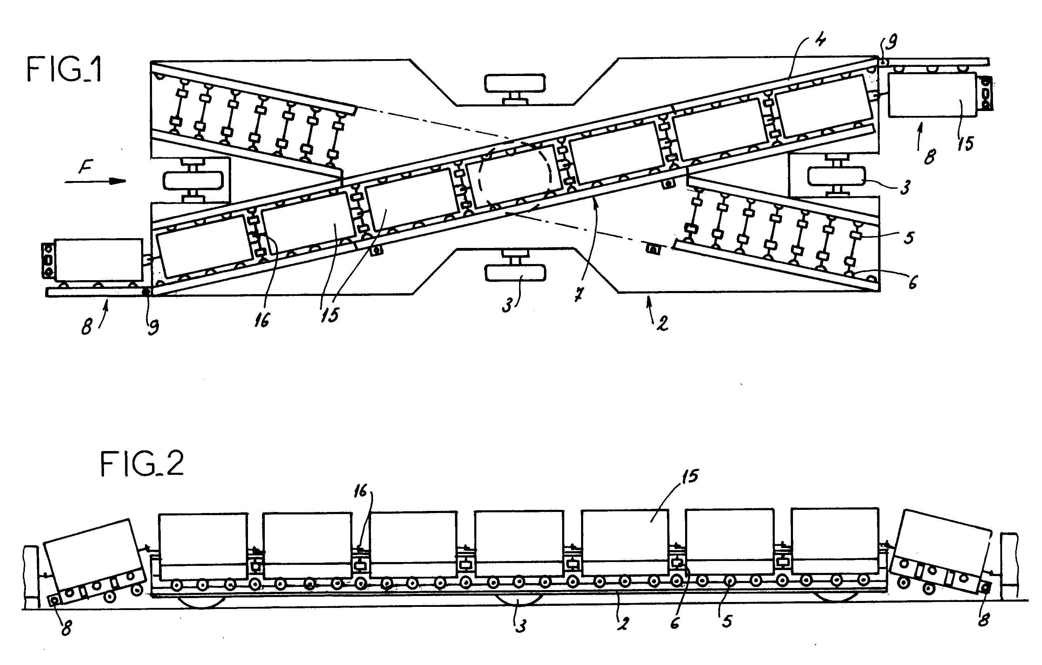

Le dispositif représenté à la figure 1 comprend une remorque désignée par la référence générale 2, destinée à être tractée par un véhicule motorisé, et comportant quatre roues 3 qui sont articulées chacune autour d'un axe vertical, et peuvent être bloquées dans la position souhaitée, de telle sorte que l'axe de la remorque puisse former un angle avec l'axe du tracteur.

Cette remorque comporte deux chemins de guidage identiques 4, se croisant à la façon d'un X, et disposes sensiblement selon les deux diagonales du rectangle formé par la remorque vue de dessus. Chaque chemin de guidage comprend une série de rouleaux 5 d'axes horizontaux et transversaux à la direction du chemin considéré, et deux séries de rouleaux verticaux 6 disposés de part et d'autre des rouleaux horizontaux 5. Il est possible de régler de façon mécanique la position d'au moins une série de rouleaux 6, dans un sens perpendiculaire à la direction du chemin considéré, de façon à régler l'écartement entre les deux séries de rouleaux verticaux, pour adapter cet écartement à la taille des éléments à transporter.

Dans la zone de croisement, il est prévu une pièce pivotante désignée par la référence générale 7, portant des rouleaux verticaux et des rouleaux horizontaux, susceptibles d'amener ceux-ci soit dans l'alignement d'un chemin de guidage, soit dans l'alignement de l'autre chemin de guidage.

A chacune de ses extrémités, la remorque est équipée d'un bec désigné par la référence générale 8, monté pivotant autour d'un axe vertical 9 sur la remorque, et susceptible d'être bloqué dans la position angulaire choisie. En pratique, chaque bec est orienté pour pouvoir se trouver en alignement avec la série d'éléments à déplacer, pour le premier, et avec la série d'éléments qui viennent d'être déplacés pour le second.

Comme montré au dessin, chaque bec est incliné de haut en bas, et de son extrémité située du côté de la remorque vers son extrémité libre.

Dans la forme d'exécution représentée à la figure 5, chaque bec comporte un bâti 10 tubulaire, équipé d'une série de rouleaux 12 horizontaux et de deux séries de rouleaux 13 sensiblement verticaux, la taille du bâti, et les dimensions des rouleaux respectivement 12 et 13 étant telles qu'ils viennent prendre appui contre les parois d'un évidement central et longitudinal de section en U 14 ménagé dans un élément 15. Les rouleaux 12 prennent appui dans le fond du U et supportent l'élément, tandis que les rouleaux 13 sont destinés a assurer le guidage latéral des éléments par appui contre les parois latérales du U.

En pratique, les différents éléments, tous désignés par la référence 15, sont reliés les uns aux autres, par exemple par clavetage, comme désigné par la référence 16. Le bec situe en avant dans le sens de déplacement du véhicule vient s'engager dans l'évidement que comporte à sa base le premier élément, après quoi, ce premier élément, compte tenu du déplacement de la remorque vers l'avant, est déplacé relativement à la remorque à l'intérieur du chemin de guidage, puis reposé sur le sol après avoir traverse ce chemin de guidage et avoir pris appui sur le second bec.

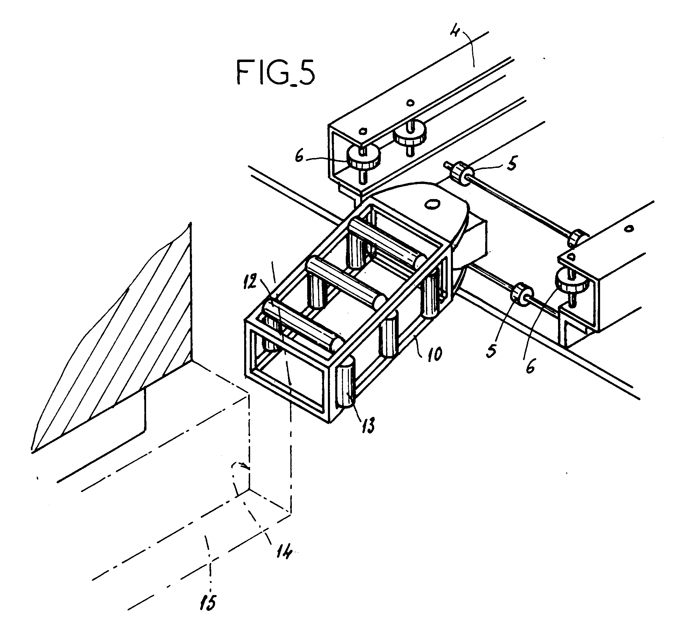

Il est possible d'augmenter la distance de décalage latéral des éléments de balisage en donnant à la remorque un angle par rapport à l'axe de déplacement du véhicule. Cela ressort nettement de la figure 4 qui représente une remorque 22 comportant un seul chemin de guidage 4 central et longitudinal, et équipée de roues orientables 23. Il doit être noté qu'après engagement des premiers éléments sur le véhicule, l'opération est entièrement automatique, et ne nécessite pas l'intervention d'opérateurs autres que les conducteurs du véhicule tracteur et de la remorque.

Dans le cas du véhicule représenté à la figure 1, l'un ou l'autre des deux chemins de guidage est utilisé, selon qu'il convient de réaliser le déplacement transversal des éléments de la gauche vers la droite ou de la droite vers la gauche.

Dans le cas du véhicule représenté à la figure 4, il convient de modifier le réglage de l'angle que forme les roues avec l'axe du véhicule, pour déplacer les éléments d'un côté ou de l'autre.

Comme il ressort de ce qui précède, l'invention apporte une grande amélioration à la technique existante en fournissant un dispositif de conception simple susceptible, du fait que les éléments sont portés et guidés latéralement, de s'adapter à des éléments de forme et de taille très diverses, tout en permettant, au cours de ce déplacement, le maintien en position des organes de sécurité ou de balisage pouvant être fixés sur les éléments de balisage.

Comme il va de soi, l'invention ne se limite pas aux seules formes d'exécution de ce dispositif décrites ci-dessus à titre d'exemples, elle en embrasse au contraire toutes les variantes.

C'est ainsi, notamment, que les chemins de guidage pourraient être équipés non pas de rouleaux, mais de surfaces de glissement, ou encore que chaque bec pourrait être équipé d'une série de rouleaux horizontaux, et de deux séries de rouleaux dont l'une au moins serait réglable, destinée à guider les éléments par appui sur leur face latérale, sans que l'on sorte pour autant du cadre de l'invention.

## Revendications

1. Dispositif pour réaliser un déplacement latéral d'une série d'éléments de balisage de voie de circulation routière liés les uns aux autres, du type comportant un véhicule motorisé ou tracté comportant un chemin de guidage d'orientation générale longitudinale dont les extrémités débouchant dans les faces avant et arrière du véhicule sont décalées transversalement l'une par rapport à l'autre, caractérisé en ce qu'il comporte au moins un chemin de guidage longitudinal (4) rectiligne pour les éléments de balisage (15), équipé de moyens de supports (5) sur lesquels les éléments (15) reposent par leur base, plane ou évidée, sans démontage des équipements de sécurité ou de balisage fixés sur la face supérieure des éléments (15), et de moyens (6) de guidage latéral des éléments (15), ce chemin de guidage d'orientation générale longitudinale par rapport au véhicule étant associé à des moyens de réglage de l'angle qu'il forme avec l'alignement des éléments de balisage à déplacer, et étant équipé à ses deux extrémités, de deux becs (8) dépassant du véhicule, inclinés chacun de haut en bas et du chemin de guidage vers l'extrémité libre du bec, servant à l'amenée successive des éléments sur le chemin de guidage puis au dépôt de ceux-ci sur la chaussée, chaque bec (8) étant monté pivotant sur le véhicule autour d'un axe vertical (9) et blocable dans la position souhaitée, qui correspond sensiblement avec l'axe de l'alignement des éléments de balisage à déplacer ou venant d'être déplacés.

2. Dispositif selon la revendication 1, caractérisé en ce que le véhicule (2, 22) est équipé de roues (3, 23) orientables et blocables dans la position souhaitée.

3. Dispositif selon l'une quelconque des revendications 1 et 2, caractérisé en ce que le véhicule (22) comporte un chemin de guidage (4) central et longitudinal, orientable depuis une position dans laquelle les extrémités du chemin de guidage ne sont pas décalées transversalement jusqu'à des positions où elles sont décalées transversalement d'un côté ou de l'autre de l'axe longitudinal du véhicule.

4. Dispositif selon l'une quelconque des revendications 1 et 2, caractérise en ce que le véhicule (2) comporte deux chemins de guidage (4) se croisant en leur milieu, à la façon d'un X, et orientés selon leux deux diagonales du rectangle que forme, en vue de dessus, la remorque.

5. Dispositif selon l'une quelconque des revendications 1 à 4, caractérisé en ce que chaque chemin de guidage (4) comprend une série de rouleaux verticaux (6) disposés de part et d'autre des rouleaux horizontaux et destinés à guider les éléments.

6. Dispositif selon la revendication 5, caractérisé en ce que les rouleaux (6) de l'une au moins des séries de rouleaux verticaux sont réglables dans une direction transversale à la direction du chemin de guidage (4), afin de pouvoir modifier l'écartement entre les deux séries de rouleaux verticaux, et permettre une adaptation à des éléments de différentes largeurs.

7. Dispositif selon l'ensemble des revendications 4 et 5, caractérisé en ce que la zone de croisement (9) des deux chemins de guidage (4) est équipée d'un élément pivotant (7) autour d'un axe vertical, formant un aiguillage, et portant des rouleaux horizontaux et des rouleaux verticaux, susceptibles d'être alignés avec les rouleaux de l'un ou l'autre des deux chemins de guidage.

8. Dispositif selon l'une quelconque des revendications 1 à 7, caractérisé en ce que, dans la mesure où les éléments de balisage (15) comportent un évidement (14) central et longitudinal en U débouchant dans leur fond, chaque bec (8) comprend un bâti (10) de section inférieure à celle de cet évidement, portant des rouleaux horizontaux (12) destinés à prendre appui dans le fond de l'évidement, pour supporter l'élément, et des rouleaux latéraux (13) d'orientation sensiblement verticale destinés à assurer le guidage de chaque élément par appui contre les flancs de l'évidement.

## Claims

1. Device for producing a lateral movement of a series of interconnected marker elements for a road traffic lane, of the type including a motorized or towed vehicle having a guide track with overall longitudinal orientation whose ends opening out at the front and rear faces of the vehicle are transversely offset with respect to each other, characterised in that it has at least one rectilinear longitudinal guide track (4) for the marker elements (15), equipped with support means (5) on which the elements (15) rest through their flat or recessed base, without any removal of the safety or marker equipment fixed to the top face of the elements (15), and means (6) for lateral guidance of the elements (15), this guide track with overall longitudinal orientation with respect to the vehicle being associated with means for adjusting the angle that it forms with the line of the marker elements to be moved, and being equipped at both of its ends with two noses (8) projecting from the vehicle, each inclined from top to bottom and from the guide track towards the free end of the nose, used for the successive feeding of the elements onto the guide track, and then for depositing them on the roadway, each nose (8) being mounted so as to pivot on the vehicle about a vertical axis (9) and able to be locked in the required position, which corresponds substantially to the axis of alignment of the marker elements to be moved or which have just been moved.

2. Device according to Claim 1, characterised in that the vehicle (2, 22) is equipped with wheels (3, 23) which can be oriented and locked in the desired position.

3. Device according to any one of Claims 1 and 2, characterised in that the vehicle (22) has a central longitudinal guide track (4) which can be oriented between a position in which the ends of the guide track are not transversely offset and positions in which they are transversely offset on one or other side of the longitudinal axis of the vehicle.

4. Device according to either one of Claims 1 and 2, characterised in that the vehicle (2) has two guide tracks (4) which cross over in their middle, in the form of an X, and which are oriented along both diagonals of the rectangle that, as seen from above, is formed by the trailer.

5. Device according to any one of Claims 1 to 4, characterised in that each guide track (4) comprises a series of vertical rollers (6) disposed on both sides of the horizontal rollers and designed to guide the elements.

6. Device according to Claim 5, characterised in that the rollers (6) of at least one of the series of vertical rollers can be adjusted in a direction transverse to the direction of the guide track (4), in order to be able to modify the distance between the two series of vertical rollers, and to allow adaptation to elements of different widths.

7. Device according to Claims 4 and 5 taken together, characterised in that the cross-over zone (9) of the two guide tracks (4) is equipped with a element (7) pivoting about a vertical axis, forming a set of points, and carrying horizontal rollers and vertical rollers able to be aligned with the rollers of either of the two guide tracks.

8. Device according to any one of Claims 1 to 7, characterised in that, in so far as the marker elements (15) have a central longitudinal U-shaped recess (14) opening out into their bottom, each nose (8) comprises a frame (10) whose cross section is smaller than that of this recess, carrying horizontal rollers (12) designed to bear upon the bottom of the recess, in order to support the element, and lateral rollers (13) of substantially vertical orientation, designed to guide each element by bearing against the sides of the recess.

## Patentansprüche

1. Anlage zur Querversetzung von untereinander verbundenen Straßenleiteinrichtungselementen, mit einem zu ziehenden oder mit einem Motor versehenen Wagen mit einer im wesentlichen längsgerichteten Führungsbahn, deren an der vorderen und hinteren Seite des Wagens sich befindenden offenen Enden voneinander quer versetzt sind, dadurch gekennzeichnet, daß sie wenigstens eine längsgerichtete, geradlinige Führungsbahn (4) für die Leiteinrichtungselemente (15) aufweist, welche ausgestattet ist mit Tragemitteln (5), auf denen die Elemente (15) mit ihrem ebenen oder ausgesparten Sockel ohne Demontage der auf der Oberseite der Elemente (15) befestigten Sicherheits- oder Leitausrüstungen ruhen, sowie mit Mitteln (6) zum seitlichen Führen der Elemente (15), wobei diese in bezug auf den Wagen im wesentlichen längsgerichtete Führungsbahn mit Mitteln zum Einstellen des Winkels verbunden ist, den sie mit der Reihe der zu versetzenden Leiteinrichtungselemente bildet, und welche an ihren beiden Enden mit zwei schnabelartigen Führungsbahnverlängerungen (8) versehen ist, die von dem Wagen abstehen und jeweils von oben nach unten und von der Führungsbahn zum freien Ende der Führungsbahnverlängerung hin geneigt sind, welche zur ununterbrochenen Zuführung der Elemente auf die Führungsbahn und dann zu deren Abstellen auf der Straße dienen, wobei jede Führungsbahnverlängerung (8) um eine vertikale Achse (9) schwenkbar an dem Wagen montiert und in der gewünschten Stellung arretierbar ist, die annähernd mit der Mittellinie der Reihe der zu versetzenden oder bereits versetzten Leiteinrichtungselementen übereinstimmt.

2. Anlage nach Anspruch 1, dadurch gekennzeichnet, daß der Wagen (2, 22) mit verstellbaren und in der gewünschten Stellung arretierbaren Rädern (3, 23) ausgestattet ist.

3. Anlage nach Anspruch 1 oder 2, dadurch gekennzeichnet, daß der Wagen (22) eine sich in der Mitte befindende und längsgerichtete Führungsbahn (4) aufweist, die aus einer Stellung, in der die Enden der Führungsbahn nicht quer voneinander versetzt sind, in Stellungen, in denen sie beiderseits der Längsachse des Wagens voneinander quer versetzt sind, verstellbar ist.

4. Anlage nach Anspruch 1 oder 2, dadurch gekennzeichnet, daß der Wagen (2) zwei sich in ihrer Mitte X-förmig kreuzende Führungsbahnen (4) aufweist, die entsprechend der beiden Diagonalen des Rechtecks, das der Anhänger in der Draufsicht bildet, angeordnet sind.

5. Anlage nach einem der Ansprüche 1 bis 4, dadurch gekennzeichnet, daß jede Führungsbahn (4) eine beidseits der horizontalen Rollen angeordnete Reihe von vertikalen Rollen (6) aufweist, die dazu bestimmt sind, die Elemente zu führen.

6. Anlage nach Anspruch 5, dadurch gekennzeichnet, daß die Rollen (6) von wenigstens einer der Reihen von vertikalen Rollen in einer zur Richtung der Führungsbahn (4) querverlaufenden Richtung verstellbar sind, um so den Abstand zwischen den beiden Reihen vertikaler Rollen verändern zu können und um eine Anpassung an Elemente unterschiedlicher Breite zu ermöglichen.

7. Anlage nach Anspruch 4 und 5, dadurch gekennzeichnet, daß der Kreuzungsbereich (9) der beiden Führungsbahnen (4) mit einem um eine vertikale Achse drehbaren Element (7) ausgestattet ist, welches eine Weiche bildet und horizontale Rollen und vertikale Rollen trägt, die mit den Rollen der einen oder der anderen Führungsbahn zum Fluchten gebracht werden können.

8. Anlage nach einem der Ansprüche 1 bis 7, dadurch gekennzeichnet, daß, sofern die Leiteinrichtungselemente (15) in ihrem Boden eine mittige und längsgerichtete, U-förmig nach unten offene Aussparung (14) aufweisen, jede Führungsbahnverlängerung (8) einen Rahmen (10) mit kleinerem Querschnitt als dem dieser Aussparung aufweist, welcher horizontale Rollen (12) trägt, die dazu bestimmt sind, am Boden der Aussparung anzuliegen, um das Element zu tragen, sowie seitliche, annähernd senkrecht ausgerichtete Rollen (13), die dazu bestimmt sind, die Führung eines jeden Elements durch Anliegen an den Seiten der Aussparung zu gewährleisten.
